# EUROPEAN PATENT SPECIFICATION

(11) **EP 3 766 747 B1**
(45) Date of publication and mention of the grant of the patent: **04.05.2022**
(21) Application number: 19211936.0
(22) Date of filing: 27.11.2019
(51) Int. Cl.: B60S 1/08

(54) **DYNAMIC WIPER CONTROL**
DYNAMISCHE WISCHERSTEUERUNG
COMMANDE D'ESSUIE-GLACE DYNAMIQUE

(30) Priority: 18.07.2019 IN 201911029001
(43) Date of publication of application: 20.01.2021
(73) Proprietor: ROSEMOUNT AEROSPACE INC., Burnsville, MN 55306-4898 (US)
(72) Inventor: DEVARAKONDA, Naveen Kumar, 560066 Karnataka, Bangalore (IN); BOJJANAPALLI, Muralidhar Rao, 560066 Karnataka, Bangalore (IN)
(74) Representative: Dehns

(56) References cited:
- DE-A1-102005 062 787
- DE-A1-102008 001 568
- US-A- 5 157 314
- US-A- 5 355 061
- US-A- 5 642 026

## Description

### BACKGROUND

The following description relates to windshield wiper systems (WWSs) and, more specifically, to a WWS of an aircraft with dynamic wiper control.

For many aircraft, a WWS is integrated with a wiper arm and a wiper blade that traverses a windshield of the aircraft. When the WWS is energized, the WWS wipes the windshield for the pilot and the copilot. In a traditional WWS, sweep limits for the wiper blade are defined through angular rotational limits of the wiper output shaft of the wiper arm. These sweep limits and a park position are controlled by software or other code that is written and designed for controlling the angular limits of the output shaft rotation so that wiper shaft rotational angles/positions are controlled for achieving a desired sweep area and parking position. The sweep limits do not take into account wiper blade tip positioning and, in existing designs, there is no possibility of feedback to be provided on the actual position of the wiper blade tip on the windshield.

During operational conditions, due to blade flexing and variable operational loading, the wiper arm deflects over time and eventually begins to run out of sweeping limits. This is called, "over sweep." Because of over sweep, the wiper blade hits/treads over the windshield frame. It is a potential danger for blades as well as the aircraft frame and can affect the performance/life of wiper blades. If over sweep is increased due to aerodynamic loads or due to the aging of wiper arm, it could lead to blade failures. Wiper control systems are disclosed in DE 10 2005 062787. This document discloses the preamble of independent claim 1.

US 5 157 314 discloses a windshield wiper system comprising a control system configured to control the driving of the wiper blade by a motor assembly in accordance with positions of the wiper blade.

DE 10 2008 001568 discloses a wiper blade with an active sensor on its tip.

### BRIEF DESCRIPTION

According to the invention, a windshield wiper system (WWS) is provided and includes a wiper blade, a motor assembly and a control system. The wiper blade includes a tip. The motor assembly is configured to drive the wiper blade in a sweep pattern across a windshield. The control system is configured to control the driving of the wiper blade by the motor assembly in accordance with positions of the tip of the wiper blade.

In accordance with additional or alternative embodiments, the wiper blade flexes in the plane of the sweep pattern.

In accordance with additional or alternative embodiments, the motor assembly includes a brushless direct current (BLDC) motor and a wiper assembly and gear head which is operably interposed between the BLDC motor and the wiper blade.

In accordance with additional or alternative embodiments, the wiper assembly and gear head has a substantial gear ratio.

The control system includes an electronic control unit (ECU) and the ECU includes control logic and a motor drive unit, which is receptive of an output from the control logic and configured to command operations of the motor assembly in accordance with the output.

In accordance with additional or alternative embodiments, the control logic is configured to generate a first command to reduce a speed of the driving of the wiper blade in accordance with the tip of the wiper blade reaching a first angle limit and to generate a second command to reverse a direction of the driving of the wiper blade in accordance with the tip of the wiper blade reaching a second angle limit.

The control system further includes a transmitter disposed in the tip of the wiper blade and first and second sensors disposed proximate to first and second angle limits of the sweep pattern, respectively, whereby the first and second sensors are provided to receive signals created by the transmitter.

In accordance with additional or alternative embodiments, each of the first and second sensors is configured to receive transmissions from the transmitter when the tip of the wiper blade is located at the first and second angle limits, respectively, and to output discrete signals indicating when the tip of the wiper blade is located at the first and second angle limits to the control logic.

In accordance with additional or alternative embodiments, the control logic is configured to generate a first command to reduce a speed of the driving of the wiper blade in accordance with the discrete signal of the first sensor indicating that the tip of the wiper blade reaches a first angle limit and to generate a second command to reverse a direction of the driving of the wiper blade in accordance with the discrete signal of the second sensor indicating that the tip of the wiper blade reaches a second angle limit.

According to another aspect of this disclosure, a windshield wiper system (WWS) is provided and includes a wiper blade, a motor assembly, first and second sensors and a control system. The wiper blade includes a tip. The motor assembly is configured to drive the wiper blade in a sweep pattern across a windshield. The first and second sensors are disposed proximate to first and second angle limits of the sweep pattern, respectively, and are configured to identify when the tip of the wiper blade is located at the first and second angle limits. The control system is configured to receive signals from the first and second sensors indicating when the tip of the wiper blade is located at the first and second angle limits and to control the driving of the wiper blade by the motor assembly accordingly.

In accordance with additional or alternative embodiments, the WWS further includes an airframe in which the windshield and the first and second sensors are supported.

In accordance with additional or alternative embodiments, the wiper blade flexes in the plane of the sweep pattern.

In accordance with additional or alternative embodiments, the motor assembly includes a brushless direct current (BLDC) motor and a wiper assembly and gear head which is operably interposed between the BLDC motor and the wiper blade.

In accordance with additional or alternative embodiments, the wiper assembly and gear head has a substantial gear ratio.

In accordance with additional or alternative embodiments, the control system includes an electronic control unit (ECU) and the ECU includes control logic receptive of the signals from the first and second sensors and a motor drive unit, which is receptive of an output from the control logic and configured to command operations of the motor assembly in accordance with the output.

In accordance with additional or alternative embodiments, the control logic is configured to reduce a speed of the driving of the wiper blade in accordance with the tip of the wiper blade reaching the first angle limit and to reverse a direction of the driving of the wiper blade in accordance with the tip of the wiper blade reaching the second angle limit.

In accordance with additional or alternative embodiments, the signals from the first and second sensors are discrete.

According to another aspect of the invention, a method of operating a windshield wiper system (WWS) as defined above is provided and includes driving the wiper blade across a windshield in a sweep pattern including first and second angle limits, sensing a position of the wiper blade tip, reducing a speed of the driving of the wiper blade when the sensing indicates that the wiper blade tip reaches the first angle limit and reversing a direction of the driving of the wiper blade when the sensing indicates that the wiper blade tip reaches the second angle limit.

In accordance with additional or alternative embodiments, the driving is responsive to a pilot/copilot command.

In accordance with additional or alternative embodiments, the method is repeatable upon completion of the sweep pattern.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings in which:
FIG. 1 is a perspective view of a WWS in accordance with embodiments;
FIG. 2 is a schematic diagram of the WWS of FIG. 1; and
FIG. 3 is a flow diagram illustrating a method of operating the WWS of FIGS. 1 and 2.

These and other advantages and features will become more apparent from the following description taken in conjunction with the drawings.

### DETAILED DESCRIPTION

As will be described below, a WWS is provided in which the problem of over sweep is addressed by placing sensors on a tip of a wiper blade and on a windshield. The sensors can allow for sensing an actual position of the tip of a wiper blade on the windshield based on readings of the sensors. Such readings can be used to control sweep limits of the wiper blade on the windshield.

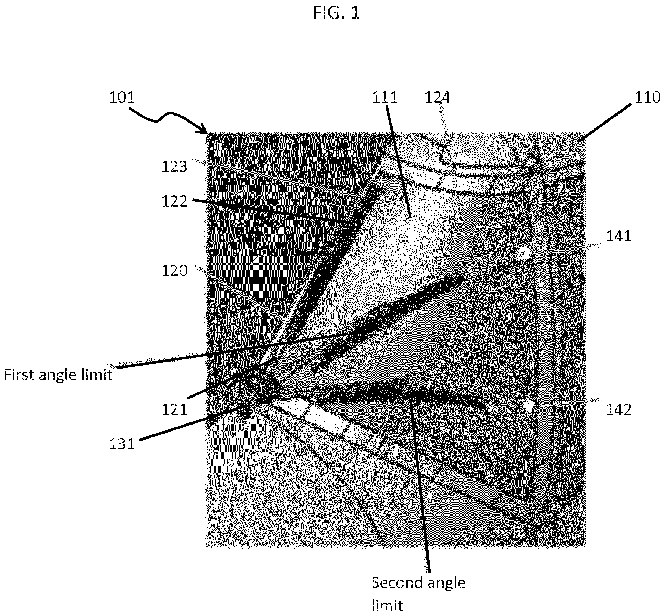

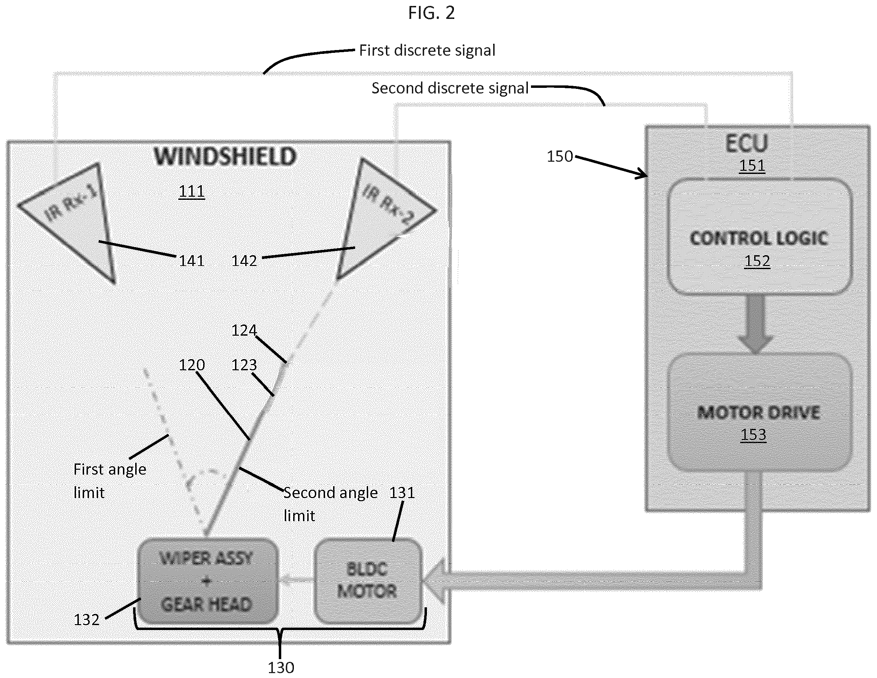

With reference to FIGS. 1 and 2, a windshield wiper system (WWS) 101 is provided for use with an airframe 110, such as an airframe of a vehicle or an aircraft, a windshield 111 that is supported in the airframe 110 and a wiper blade 120. The WWS 101 further includes a motor assembly 130 (see FIG. 2), a first sensor 141, a second sensor 142 and a control system 150 (see FIG. 2).

The wiper blade 120 includes a wiper arm 121 and a wiper blade element 122. The wiper blade element 122 is attached to a distal end of the wiper arm 121 and is biased toward and onto the windshield 111 by the wiper arm 121. The wiper blade 120 further includes a wiper blade tip 123 at a distal end of the wiper blade element 122 and a transmitter 124. The transmitter 124 is disposed in or on the wiper blade tip 123. In one embodiment, the transmitter 124 is an infrared (IR) transmitter. The wiper blade 120 is configured to assume a parked position relative to the windshield 111 unless a pilot/copilot command is entered to initiate a driving of the wiper blade 120 whereby the wiper blade element 122 moves along the windshield 111 in a sweep pattern.

The motor assembly 130 is configured to drive the wiper blade 120 in the sweep pattern across the windshield 111 such that the wiper blade element 122 moves across the windshield 111 to remove moisture or foreign object debris (FOD) from the windshield 111. During the driving of the wiper blade 120 by the motor assembly 130, the wiper blade 120 and the wiper blade element 122 in particular flex in the plane of the sweep pattern. This flexing can increase over time as various components of the wiper blade 120 degrade. In any case, the wiper blade 120 and the wiper blade element 122 in particular can flex such that the wiper blade tip 123 leads or lags behind components of the wiper blade 120.

First and second sensors 141 and 142 are provided to receive signals created by the transmitter 124. For example, if the transmitter is an IR transmitter, the first and second sensors 141, 142 can be IR receivers.

The first sensor 141 is supportively disposed in or by the airframe 110 at a location that is proximate to a sweep start or first angle limit (hereinafter referred to as a "first angle limit") of the sweep pattern. The second sensor 142 is supportively disposed in or by the airframe 110 at a location that is proximate to a sweep stop or second angle limit (hereinafter referred to as a "second angle limit") of the sweep pattern.

During a driving of the wiper blade 120 in the sweep pattern from the parked position, the transmitter 124 transmits a signal from the wiper blade tip 123. The first and second sensors 141 and 142 are each configured to communicate with the transmitter 124 such that they are capable of receiving this signal. As such, when the first sensor 141 receives the signal, the reception of the signal by the first sensor 141 effectively identifies that the wiper blade tip 123 has reached the first angle limit. Similarly, when the second sensor 142 receives the signal, the reception of the signal by the second sensor 142 effectively identifies that the wiper blade tip 123 has reached the second angle limit.

When the first sensor 141 receives the signal from the transmitter 124, the first sensor 141 generates and issues a first discrete signal and, when the second sensor receives the signal from the transmitter 124, the second sensor 142 generates and issues a second discrete signal. The control system 150 is configured to receive the first and second discrete signals from the first and second sensors 141 and 142. Since these first and second discrete signals effectively indicate when the wiper blade tip 123 is located at the first and second angle limits, respectively, the control system 150 is made aware of the position of the wiper blade tip 123 by the first and second discrete signals and can thus control the driving of the wiper blade 120 by the motor assembly 130 accordingly.

To an extent the wiper blade tip 123 leads (or lags behind) other components of the wiper blade 120, the control of the driving of the wiper blade 120 by the motor assembly 130 that is executed by the control system 150 allows for over sweep incidents to be avoided. That is, while a conventional control system in a WWS does not take into account the position of a wiper blade tip, the control system 150 described herein does take into account the position of the wiper blade tip 123 as identified by the communication between the transmitter 124 and the first and second sensors 141 and 142. In this way, the control system 150 can slow the driving of the wiper blade 120 by the motor assembly 130 when the wiper blade tip 123 reaches the first angle limit and can reverse a direction of the driving of the wiper blade 120 by the motor assembly 130 when the wiper blade tip 123 reaches the second angle limit. Here, the slowing of the driving of the wiper blade 120 facilitates a smooth reversal of the driving direction, which reduces wear and extends a life of the WWS. In addition, the identification of the moments when the wiper blade tip 123 reaches the first and second angle limits can allow the control system 150 to predict when the slowed driving and the direction reversal will occur and to take additional actions in accordance with such predictions.

As shown in FIG. 2, the motor assembly 130 includes a brushless direct current (BLDC) motor 131 and a wiper assembly and gear head 132. The wiper assembly and gear head 132 is operably interposed between the BLDC motor 131and the wiper blade 120. In accordance with embodiments, the wiper assembly and gear head 132 has a substantial gear ratio and, therefore, input rotations of the BLDC motor 131 will have limited to no effect on the potential of an over sweep incident during processing executed by the control system 150.

The processing of the control system 150 can also take into account a processing delay. In doing so, the processing of the control system 150 can include commanding a slowing of the driving of the wiper blade 120 by the motor assembly 130. This slowing can take place over various intervals, including, but not limited to, between the first and second angle limits as well as just outside the first sand second angle limits.

As shown in FIG. 2, the control system 150 includes an electronic control unit (ECU) 151. The ECU 151 includes control logic 152 and a motor drive unit 153. The control logic 152 is receptive of a pilot/copilot commands to start or activate the WWS 101 and is configured to generate a first output that dictates that the driving of the wiper blade 120 by the motor assembly 130 away from the parked position is to begin. The control logic 152 is also receptive of the first and second discrete signals from the first and second sensors 141 and 142 and is configured to generate second outputs that dictates when the driving of the wiper blade 120 by the motor assembly 130 should be slowed down or reversed. The motor drive unit 153 is receptive of the first and second outputs from the control logic 152 and is configured to command operations of the BLDC motor 131 of the motor assembly 130 in accordance with the first and second outputs. That is, as noted above, the control logic is configured to generate second outputs that command a reduction in a speed of the driving of the wiper blade 120 by the motor assembly 130 in accordance with the wiper blade tip 123 reaching the first angle limit and that command a reversal of a direction of the driving of the wiper blade 120 by the motor assembly 130 in accordance with the wiper blade tip 123 reaching the second angle limit.

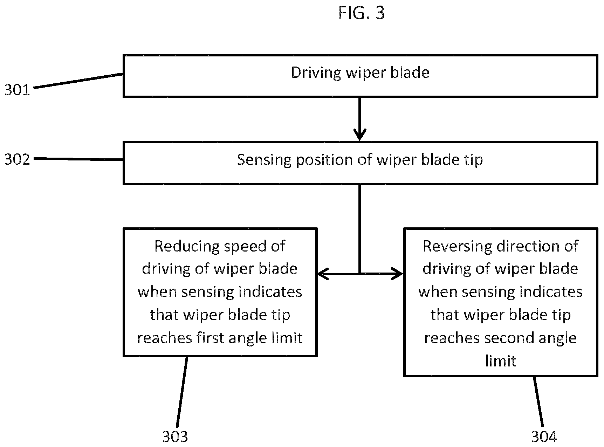

With reference to FIG. 3, a method of operating the WWS 101 described above is provided. As shown in FIG. 3, the method includes driving the wiper blade 120 across the windshield 111 in the sweep pattern including the first and second angle limits (301) responsive to a pilot/copilot command, sensing a position of the wiper blade tip 123 (302), reducing a speed of the driving of the wiper blade 120 when the sensing indicates that the wiper blade tip 123 reaches the first angle limit (303) and reversing a direction of the driving of the wiper blade 120 when the sensing indicates that the wiper blade tip 123 reaches the second angle limit (304). The method is repeatable upon completion of the sweep pattern.

While the description provided herein generally refers to the control of the driving of the wiper blade 120 by the motor assembly 130 in the direction leading away from the parked position, it is to be understood that the control can be executed in the reverse direction as well.

Technical effects and benefits of the enclosure design of the present disclosure are that close tolerance of sweep angles can be achieved with accuracies of less than 1° while variations in sweep limits and parking position discrepancies can be avoided. Additional benefits include the enhancement of wiper blade life and the reduction or avoidance in the need for unscheduled wiper blade replacements. The WWS described herein provides for consistent performance and a reduction or avoidance in unpredicted additional loads due to damaged wiper blades resulting from over sweep.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the invention as defined by the claims. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A windshield wiper system, WWS, comprising:
a wiper blade (120) comprising a tip (123);
a motor assembly (130) configured to drive the wiper blade in a sweep pattern across a windshield (111);
a control system (150) configured to control the driving of the wiper blade by the motor assembly in accordance with positions of the tin of the wiper blade; wherein
the control system comprises an electronic control unit, ECU (151), comprising control logic (152); and
a motor drive unit (153), which is receptive of an output from the control logic and configured to command operations of the motor assembly in accordance with the output; **characterized in that** the control system further comprises
a transmitter (124) disposed in the tip of the wiper blade; and
first and second sensors (141, 142) disposed proximate to first and second angle limits of the sweep pattern, respectively, whereby the first and second sensors (141, 142) are provided to receive signals created by the transmitter (124).

2. The WWS according to claim 1, wherein the wiper blade flexes in the plane of the sweep pattern.

3. The WWS according to claim 1 or 2, wherein the motor assembly comprises:
a brushless direct current, BLDC, motor (131); and
a wiper assembly and gear head (132) which is operably interposed between the BLDC motor and the wiper blade.

4. The WWS according to claim 3, wherein the wiper assembly and gear head has a gear ratio.

5. The WWS according to any preceding claim, wherein the control logic is configured to:
generate a first command to reduce a speed of the driving of the wiper blade in accordance with the tip of the wiper blade reaching a first angle limit, and
generate a second command to reverse a direction of the driving of the wiper blade in accordance with the tip of the wiper blade reaching a second angle limit.

6. The WWS according to any preceding claim, wherein each of the first and second sensors is configured to:
receive transmissions from the transmitter when the tip of the wiper blade is located at the first and second angle limits, respectively, and
output discrete signals indicating when the tip of the wiper blade is located at the first and second angle limits to the control logic.

7. The WWS according to claim 6, wherein the control logic is configured to:
generate a first command to reduce a speed of the driving of the wiper blade in accordance with the discrete signal of the first sensor indicating that the tip of the wiper blade reaches a first angle limit, and
generate a second command to reverse a direction of the driving of the wiper blade in accordance with the discrete signal of the second sensor indicating that the tip of the wiper blade reaches a second angle limit.

8. The WWS of any of claims 1 to 4, wherein the first and second sensors (141, 142) are
configured to identify when the tip of the wiper blade is located at the first and second angle limits; and wherein
the control system (150) is configured to receive signals from the first and second sensors indicating when the tip of the wiper blade is located at the first and second angle limits and to control the driving of the wiper blade by the motor assembly accordingly.

9. The WWS according to claim 8, further comprising an airframe (110) in which the windshield (111) and the first and second sensors (141, 142) are supported.

10. The WWS according to claim 8, wherein the control logic is receptive of the signals from the first and second sensors; and preferably wherein the control logic is configured to:
reduce a speed of the driving of the wiper blade in accordance with the tip of the wiper blade reaching the first angle limit, and
reverse a direction of the driving of the wiper blade in accordance with the tip of the wiper blade reaching the second angle limit.

11. The WWS according to claim 8 or 9, wherein the signals from the first and second sensors are discrete.

12. A method of operating a windshield wiper system, WWS, as claimed in any preceding claim, the method comprising:
driving the wiper blade across a windshield in a sweep pattern comprising first and second angle limits;
sensing a position of the wiper blade tip;
reducing a speed of the driving of the wiper blade when the sensing indicates that the wiper blade tip reaches the first angle limit; and
reversing a direction of the driving of the wiper blade when the sensing indicates that the wiper blade tip reaches the second angle limit.

13. The method according to claim 12, wherein the driving is responsive to a pilot/copilot command.

14. The method according to claim 12 or 13, wherein the method is repeatable upon completion of the sweep pattern.

## Patentansprüche

1. Windschutzscheibenwischersystem (WWS) umfassend:
ein Wischerblatt (120), umfassend eine Spitze (123);
eine Motorbaugruppe (130), die dazu konfiguriert ist, das Wischerblatt in einem Wischmuster über eine Windschutzscheibe (111) anzutreiben;
ein Steuerungssystem (150), das dazu konfiguriert ist, den Antrieb des Wischerblatts durch die Motorbaugruppe entsprechend den Positionen der Spitze des Wischerblatts zu steuern; wobei das Steuersystem eine elektronische Steuereinheit (ECU) (151) umfasst, die eine Steuerlogik (152) umfasst; und
eine Motorantriebseinheit (153), die eine Ausgabe von der Steuerlogik empfängt und dazu konfiguriert ist, den Betrieb der Motorbaugruppe entsprechend der Ausgabe zu befehlen; **dadurch gekennzeichnet, dass** das Steuersystem ferner Folgendes umfasst einen Sender (124), der in der Spitze des Wischerblatts angeordnet ist; und
einen ersten und einen zweiten Sensor (141, 142), die in der Nähe jeweils einer ersten und einer zweiten Winkelgrenze des Wischmusters angeordnet sind, wobei der erste und der zweite Sensor (141, 142) bereitgestellt sind, um Signale zu empfangen, die von dem Sender (124) erzeugt werden.

2. WWS nach Anspruch 1, wobei sich das Wischerblatt in der Ebene des Wischmusters biegt.

3. WWS nach Anspruch 1 oder 2, wobei die Motorbaugruppe folgendes umfasst:
einen bürstenlosen Gleichstrommotor (BLDC) (131); und
eine Wischerbaugruppe und einen Getriebekopf (132), welcher betriebswirksam zwischen dem BLDC-Motor und dem Wischerblatt zwischengeschaltet ist.

4. WWS nach Anspruch 3, wobei die Wischerbaugruppe und der Getriebekopf eine Getriebeübersetzung aufweisen.

5. WWS nach einem der vorstehenden Ansprüche, wobei die Steuerlogik zu Folgendem konfiguriert ist:
Generieren eines ersten Befehls, eine Antriebsgeschwindigkeit des Wischerblatts zu reduzieren, wenn die Spitze des Wischerblatts eine erste Winkelgrenze erreicht, und
Generieren eines zweiten Befehls, eine Richtung des Antriebs des Wischerblatts umzukehren, wenn die Spitze des Wischerblatts eine zweite Winkelgrenze erreicht.

6. WWS nach einem der vorstehenden Ansprüche, wobei jeder des ersten und zweiten Sensors zu Folgendem konfiguriert ist:
Empfangen von Sendungen von dem Sender, wenn sich die Spitze des Wischerblatts jeweils an der ersten und zweiten Winkelgrenze befindet, und
Ausgeben von diskreten Signalen an die Steuerlogik, die anzeigen, wenn sich die Spitze des Wischerblatts an der ersten und zweiten Winkelgrenze befindet.

7. WWS nach Anspruch 6, wobei die Steuerlogik zu Folgendem konfiguriert ist:
Generieren eines ersten Befehls, um eine Antriebsgeschwindigkeit des Wischerblatts entsprechend dem diskreten Signal des ersten Sensors zu reduzieren, das anzeigt, dass die Spitze des Wischerblatts eine erste Winkelgrenze erreicht, und
Generieren eines zweiten Befehls, eine Richtung des Antriebs des Wischerblatts entsprechend dem diskreten Signal des zweiten Sensors umzukehren, das anzeigt, dass die Spitze des Wischerblatts eine zweite Winkelgrenze erreicht.

8. WWS nach einem der Ansprüche 1 bis 4, wobei der erste und der zweite Sensor (141, 142) dazu konfiguriert sind, zu erkennen, wenn sich die Spitze des Wischerblatts an der ersten und der zweiten Winkelgrenze befindet; und wobei
das Steuerungssystem (150) dazu konfiguriert ist, Signale von dem ersten und dem zweiten Sensor zu empfangen, die anzeigen, wenn sich die Spitze des Wischerblatts an der ersten und der zweiten Winkelgrenze befindet, und dazu, den Antrieb des Wischerblatts durch die Motorbaugruppe entsprechend zu steuern.

9. WWS nach Anspruch 8, ferner umfassend ein Flugwerk (110), in welchem die Windschutzscheibe (111) und der erste und der zweite Sensor (141, 142) gelagert sind.

10. WWS nach Anspruch 8, wobei die Steuerlogik die Signale von dem ersten und dem zweiten Sensor empfängt; und vorzugsweise wobei die Steuerlogik zu Folgendem konfiguriert ist:
Reduzieren einer Geschwindigkeit des Antriebs des Wischerblatts, wenn die Spitze des Wischerblatts die erste Winkelgrenze erreicht, und
Umkehren einer Richtung des Antriebs des Wischerblatts, wenn die Spitze des Wischerblatts die zweite Winkelgrenze erreicht.

11. WWS nach Anspruch 8 oder 9, wobei die Signale von dem ersten und dem zweiten Sensor diskret sind.

12. Verfahren zum Betreiben eines Windschutzscheibenwischersystems (WWS) nach einem der vorstehenden Ansprüche, wobei das Verfahren Folgendes umfasst:
Antreiben des Wischerblatts über eine Windschutzscheibe in einem Wischmuster, das eine erste und zweite Winkelgrenze umfasst;
Erfassen einer Position der Wischerblattspitze;
Reduzieren einer Antriebsgeschwindigkeit des Wischerblatts, wenn das Erfassen anzeigt, dass die Wischerblattspitze die erste Winkelgrenze erreicht; und
Umkehren einer Antriebsrichtung des Wischerblatts, wenn das Erfassen anzeigt, dass die Wischerblattspitze die zweite Winkelgrenze erreicht.

13. Verfahren nach Anspruch 12, wobei ein Antreiben auf einen Piloten-/Kopilotenbefehl anspricht.

14. Verfahren nach Anspruch 12 oder 13, wobei das Verfahren nach Beendigung des Wischmusters wiederholbar ist.

## Revendications

1. Système d'essuie-glace de pare-brise, WWS, comprenant :
un balai d'essuie-glace (120) comprenant une pointe (123) ;
un ensemble moteur (130) configuré pour entraîner le balai d'essuie-glace selon un mouvement de balayage sur un pare-brise (111) ;
un système de commande (150) configuré pour commander l'entraînement du balai d'essuie-glace par l'ensemble moteur en fonction des positions de la pointe du balai d'essuie-glace ;
dans lequel le système de commande comprend une unité de commande électronique, ECU (151), comprenant une logique de commande (152) ; et
une unité d'entraînement de moteur (153), qui reçoit une sortie provenant de la logique de commande et configurée pour commander les opérations de l'ensemble moteur en fonction de la sortie ;
**caractérisé en ce que** le système de commande comprend en outre un émetteur (124) disposé dans la pointe du balai d'essuie-glace ; et
des premier et second capteurs (141, 142) disposés à proximité des première et seconde limites d'angle du mouvement de balayage, respectivement, moyennant quoi les premier et second capteurs (141, 142) sont prévus pour recevoir des signaux créés par l'émetteur (124).

2. WWS selon la revendication 1, dans lequel le balai d'essuie-glace fléchit dans le plan du mouvement de balayage.

3. WWS selon la revendication 1 ou 2, dans lequel l'ensemble moteur comprend :
un moteur à courant continu sans balai, BLDC, (131) ; et
un ensemble d'essuie-glace et une tête d'engrenage (132) qui est interposée de manière opérationnelle entre le moteur BLDC et le balai d'essuie-glace.

4. WWS selon la revendication 3, dans lequel l'ensemble d'essuie-glace et la tête d'engrenage a un rapport d'engrenage.

5. WWS selon une quelconque revendication précédente, dans lequel la logique de commande est configurée pour :
générer une première commande afin de réduire une vitesse de l'entraînement du balai d'essuie-glace lorsque la pointe du balai d'essuie-glace atteint une première limite d'angle, et
générer une seconde commande afin d'inverser une direction de l'entraînement du balai d'essuie-glace lorsque la pointe du balai d'essuie-glace atteint une seconde limite d'angle.

6. WWS selon une quelconque revendication précédente, dans lequel chacun des premier et second capteurs est configuré pour :
recevoir des transmissions provenant de l'émetteur lorsque la pointe du balai d'essuie-glace est située aux première et seconde limites d'angle, respectivement, et
émettre des signaux discrets indiquant le moment où la pointe du balai d'essuie-glace est située aux première et seconde limites d'angle vers la logique de commande.

7. WWS selon la revendication 6, dans lequel la logique de commande est configurée pour :
générer une première commande afin de réduire une vitesse de l'entraînement du balai d'essuie-glace lorsque le signal discret du premier capteur indique que la pointe du balai d'essuie-glace atteint une première limite d'angle, et
générer une seconde commande afin d'inverser une direction de l'entraînement du balai d'essuie-glace lorsque le signal discret du second capteur indique que la pointe du balai d'essuie-glace atteint une seconde limite d'angle.

8. WWS selon l'une quelconque des revendications 1 à 4, dans lequel les premier et second capteurs (141, 142) sont configurés pour identifier le moment où la pointe du balai d'essuie-glace est située aux première et seconde limites d'angle ; et dans lequel
le système de commande (150) est configuré pour recevoir des signaux provenant des premier et second capteurs indiquant le moment où la pointe du balai d'essuie-glace est située aux première et seconde limites d'angle et pour commander l'entraînement du balai d'essuie-glace par l'ensemble moteur en conséquence.

9. WWS selon la revendication 8, comprenant en outre une cellule (110) dans laquelle le pare-brise (111) et les premier et second capteurs (141, 142) sont supportés.

10. WWS selon la revendication 8, dans lequel la logique de commande reçoit des signaux provenant des premier et second capteurs ; et de préférence dans lequel la logique de commande est configurée pour :
réduire une vitesse de l'entraînement du balai d'essuie-glace lorsque la pointe du balai d'essuie-glace atteint la première limite d'angle, et
inverser une direction de l'entraînement du balai d'essuie-glace lorsque la pointe du balai d'essuie-glace atteint la seconde limite d'angle.

11. WWS selon la revendication 8 ou 9, dans lequel les signaux provenant des premier et second capteurs sont discrets.

12. Procédé de fonctionnement d'un système d'essuie-glace de pare-brise, WWS, selon une quelconque revendication précédente, le procédé comprenant :
l'entraînement du balai d'essuie-glace sur un pare-brise selon un mouvement de balayage comprenant des première et seconde limites d'angle ;
la détection d'une position de la pointe de balai d'essuie-glace ;
la réduction d'une vitesse de l'entraînement du balai d'essuie-glace lorsque la détection indique que la pointe de balai d'essuie-glace atteint la première limite d'angle ; et
l'inversement d'une direction de l'entraînement du balai d'essuie-glace lorsque la détection indique que la pointe de balai d'essuie-glace atteint la seconde limite d'angle.

13. Procédé selon la revendication 12, dans lequel l'entraînement réagit à une commande pilote/copilote.

14. Procédé selon la revendication 12 ou 13, dans lequel le procédé est répétable lors de l'achèvement du mouvement de balayage.
